# EUROPÄISCHE PATENTANMELDUNG

(11) **EP 3 278 762 A1**
(43) Veröffentlichungstag der Anmeldung: **07.02.2018**
(21) Anmeldenummer: 16182676.3
(22) Anmeldetag: 04.08.2016
(51) Int. Cl.: A61C 17/02, A61C 8/00, A61C 3/025

(54) **INSTRUMENTENANSATZ FÜR DIE REINIGUNG VON IMPLANTATOBERFLÄCHEN**

(71) Anmelder: Justus-Liebig-Universität Gießen, 35390 Gießen (DE)
(72) Erfinder: Meyle, Jörg, 35444 Biebertal (DE)
(74) Vertreter: Stumpf, Peter

(57) **Zusammenfassung**

Die Erfindung betrifft einen Instrumentenansatz (1) zur Reinigung von Zahnwurzelbzw. Implantatoberflächen. Dieser umfassend eine Hohlröhre (5) mit einer Einströmöffnung (10), durch die ein Fluidstrahl eingeleitet werden kann. Weiterhin umfasst er wenigstens eine Ausströmöffnung (20). Der Instrumentenansatz ist dabei an dem der Einströmöffnung gegenüberliegendem Ende verschlossen. Wenigstens eine Ausströmöffnung (20) weist einem Winkel α von mehr als 90° bezogen auf die Längsachse z des Instrumentenansatzes auf, so dass eine Umlenkung des Fluids in Richtung Einströmöffnung (10) bewirkt wird.

## Beschreibung

### Instrumentenansatz für die Reinigung von Implantatoberflächen

Die vorliegende Erfindung betrifft einen Instrumentenansatz zur Reinigung von Zahnwurzel- und Implantatoberflächen insbesondere bei Zahnimplantaten.

### Beschreibung und Einleitung des allgemeinen Gebietes der Erfindung

Die bei parodontalen bzw. peri-implantären Entzündungen freiliegenden Oberflächenanteile von Zahnwurzeln bzw. Zahnimplantaten sind regelmäßig bakteriell kontaminiert und teilweise von verkalkten Auflagerungen (Zahnstein) bzw. von einem unverkalkten bakteriellen Biofilm bedeckt. Die Anatomie der Zahnwurzeln mit ihren gekrümmten und irregulären Oberflächen vor allem im Wurzelverzweigungsbereich (=Furkationsbereich) verhindert in vielen Fällen eine vollständige Reinigung. Auf Grund der Oberflächengeometrie der Implantate, in den meisten Fällen handelt es sich um ein Schraubendesign bzw. schraubenähnliches Design, entstehen an der Materialoberfläche Unterschnitte, die auf Grund der Defektgeometrie nur sehr schwer bzw. überhaupt nicht zu reinigen sind.

### Stand der Technik

Üblicherweise erfolgt die Reinigung von Zahnwurzeloberflächen und Implantatoberflächen mechanisch mit Hand- oder Ultraschallinstrumenten. Weiterhin erfolgt eine Reinigung mit Pulver/Wasserstrahlgeräten durch ein Pulver/Wasser-Gemisch.

Diese Geräte besitzen Aufsätze durch die das Pulver/Wasser-Gemisch austreten kann. Diese Aufsätze werden üblicherweise als Instrumentenansätze bezeichnet.

Bisherige Instrumentenansätze sind für eine gründliche Reinigung aber oftmals nicht ausreichend, da die Defekte um die Zahnwurzeln bzw. Implantate becherförmig oder kraterartig verlaufen können und sich nach apikal (gegen Ende des Implantates bzw. der Zahnwurzel) verjüngen, so dass ein Zugang von der Seite in einem Winkel von 90 Grad, vor allem in den unteren Abschnitten nicht möglich ist. Dasselbe gilt für die Reinigung der Furkationsbereiche an natürlichen Zähnen, die auf Grund vorhandener Zahnfleischtaschen oder Knochentaschen, bzw. der anatomischen Gegebenheit nur schwer zugänglich sind. Dies schränkt die Reinigungsmöglichkeit dieser kontaminierten Oberflächen sehr ein und verhindert eine Ausheilung der dort vorhandenen Entzündung. Eine komplette Reinigung der Unterschnitte im Bereich der Gewindegänge der Implantate ist mit herkömmlichen Instrumentenansätzen kaum möglich.

Weiterhin werden zur Reinigung der Implantatoberfläche auch verschiedene Bürsten mit horizontal rotierenden Borsten vorgeschlagen, durch die es ebenfalls möglich sein soll, die Bereiche mit Unterschnitten mechanisch zu säubern. Dies gelingt aber auch nur unvollständig bzw. überhaupt nicht, da die Enge der Defekte dies in vielen Fällen verhindert.

Durch die reduzierte Zugänglichkeit und die eingeschränkte Möglichkeit diese unterschnittenen Abschnitte der Implantatoberfläche perfekt zu reinigen und zu dekontaminieren, steigt das Risiko, dass von diesen schlecht gereinigten Abschnitten Entzündungsrezidive ausgehen, die den Erfolg der gesamten Behandlungsmaßnahme in Frage stellen bzw. zunichte machen.

### Aufgabe

Aufgabe der vorliegenden Erfindung ist die Nachteile der Vorrichtungen aus dem Stand der Technik zu vermeiden und durch Applikation eines Pulver/Luft/WasserGemisches in eine Zahnfleischtasche bzw. in den peri-implantären Defekt, den dort vorhandenen bakteriellen Biofilm von der Zahnwurzel bzw. Implantatoberfläche abzulösen, aus der Zahnfleischtasche heraus in die Mundhöhle zu spülen und so eine vollständige Säuberung der infizierten Zahnwurzeloberfläche bzw. der Implantatoberfläche zu gewährleisten.

### Lösung der Aufgabe

Gelöst wird diese Aufgabe durch einen Instrumentenansatz mit den Merkmalen des Anspruchs 1. Vorteilhafte Ausführungsformen und Weiterbildungen der vorliegenden Erfindung ergeben sich aus den Unteransprüchen.

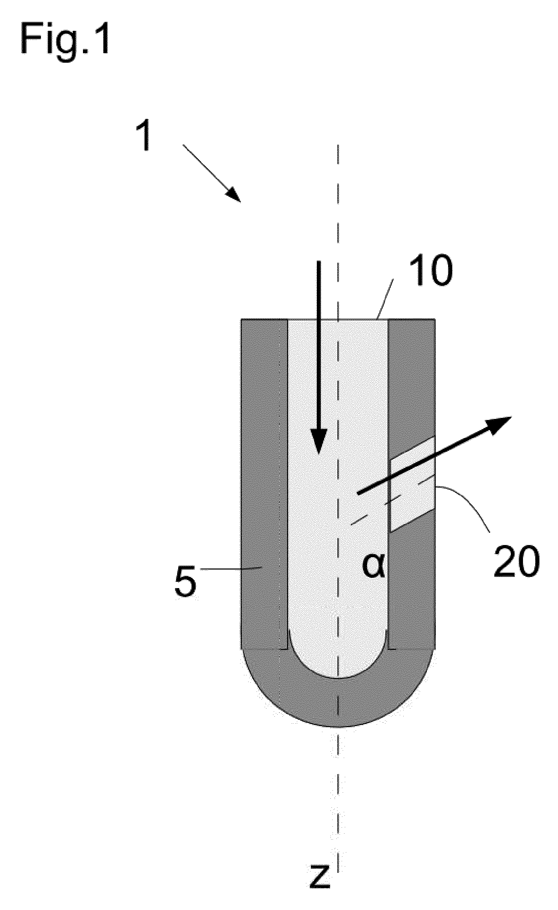

Der erfindungsgemäße Instrumentenansatz 1 umfasst eine Hohlröhre 5. Er weist eine oder mehrere Einströmöffnungen 10 auf, durch die ein Fluidstrahl wie z.B. ein Pulver/Wasserstrahl-Gemisch eingeleitet werden kann. Weiterhin ist der erfindungsgemäße Instrumentenansatz 1 an dem der Einströmöffnungen 10 gegenüberliegendem Ende verschlossen (Fig. 1).

Weiterhin weist der erfindungsgemäße Instrumentenansatz 1 wenigstens eine Ausströmöffnung 20 auf. Diese weist in einem Winkel α von mehr als 90° bevorzugt wenigstens 110° besonders bevorzugt zwischen 130° und 140°auf, bezogen auf die Längsachse z des Instrumentenansatzes auf. Dadurch bewirkt sie eine Umlenkung eines Fluidstrahles in Richtung Einströmöffnung. Bei einer Zahnwurzel- bzw. Zahnimplantatreinigung ist diese Richtung die koronare Richtung. Durch die koronar ausgerichteten Ausströmöffnung 20 (Fig. 1) wird das Fluid so umgelenkt, dass es von unten an die Unterschnitte der Implantatoberfläche herangeführt wird, um auch diese Abschnitte zu säubern.

Die Geometrie der Ausströmöffnung 20 kann rund oder oval sein, bei einer ovalen Form soll die Längsachse des Ovals parallel oder rechtwinklig zur Längsachse des Ansatzes verlaufen. Der Durchmesser der Austrittsöffnung liegt bevorzugt zwischen 0,1 mm bis 1 mm. Dabei muss die Ausströmöffnung 20 in ihr Dimension größer als der Durchmesser der einzusetzenden Pulverkörner des eingesetzten Fluids sein.

Der erfindungsgemäße Instrumentenansatz 1 besteht in einer ersten Ausführungsvariante aus einem Material, das thermoplastisch verformt werden kann. Dies erleichtert das Anbringen der mindestens einen schrägverlaufenden Ausströmöffnung 20.

Geeignet ist hierzu beispielsweise Polyethylenglycol, da dieses Material bereits in der Zahnmedizin als Werkstoff für Instrumentenansätze in Verwendung ist. Ein Instrumentenansatz aus diesem Material wird vorzugsweise als Einmalartikel verwendet und nach Gebrauch entsorgt. Eine Neusterilisation muss daher nicht gewährleistet sein.

Alternativ besteht der erfindungsgemäße Instrumentenansatz 1 aus einem mundbeständigen Metall. Dies sind z.B. Gold, Metalle der Platingruppe, Chrom, Edelstahl oder Titan. Ein Instrumentenansatz aus einem mundbeständigen Metall ist wiederverwendbar, weil er sterilisierbar ist.

Die Hohlröhre 5 ist bevorzugt rotationssymmetrisch bezüglich ihrer Längsachse z ausgebildet. So kann der erfindungsgemäße Instrumentenansatz 1 an allen Zahn- bzw. Implantatstellen eingeführt und benutzt werden.

Das der Einströmöffnung 10 abgewandte Ende des Instrumentenansatzes ist bevorzugt abgerundet ausgebildet, um eine Verletzungsgefahr möglichst auszuschließen.

In einer weiteren Ausführungsform weist der erfindungsmäße Instrumentenansatz 1 noch zusätzlich wenigstens eine weitere Ausströmöffnung 21 mit einem abweichenden Abstand von der Einströmöffnung 10 auf, wobei die Ausströmöffnung mit dem kleineren Abstand zur Einströmöffnung 10 kleiner ausgebildet ist. Kleiner ausgebildet heißt, dass die Querschnittsfläche und somit der Fluidstrom durch die Ausströmöffnung kleiner ist. Damit wird erreicht, dass bei einem entsprechenden Gewebewiderstand der Großteil des Fluides nicht bereits im koronaren Abschnitt freigesetzt wird, sondern die größte Fluidmenge am von der Einströmöffnung abgewandten Seite des Instrumentensatzes austritt und so eine bessere Tiefenwirkung erreicht wird. Bei einer Zahnwurzel- oder Zahnimplantatreinigung wird der von der Einströmöffnung abgewandte Abschnitt des Instrumentenansatzes als apikal (d.h. der Zahnwurzelspitze zugewandt) bezeichnet.

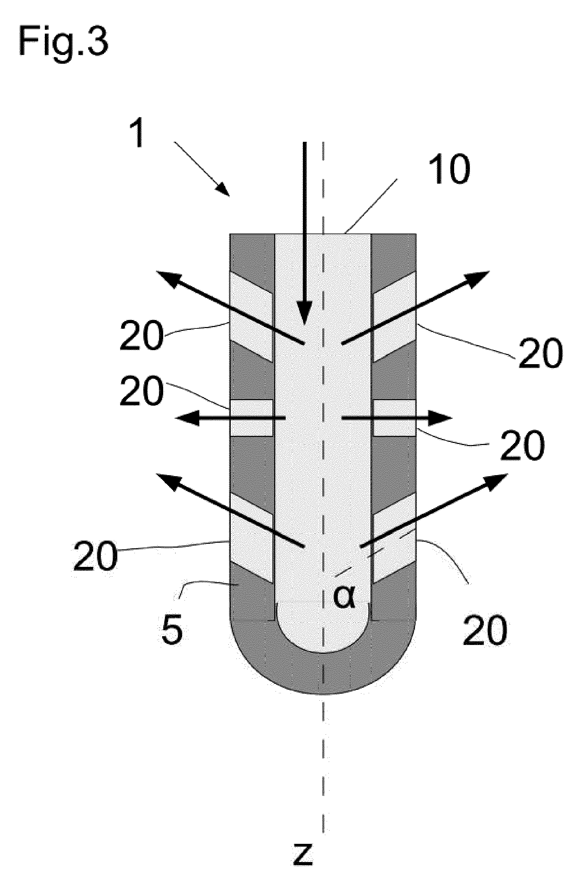

In einer weiteren Ausführungsform weist der erfindungsmäße Instrumentenansatz 1 noch zusätzlich wenigstens eine horizontal verlaufende Ausströmöffnung 20 auf. (siehe Fig. 3) Die Kombination mit den/der mindestens einen horizontal (α=90°) verlaufenden Ausströmöffnungen ermöglicht eine gleichzeitige Reinigung verschiedener Abschnitte der Zahnwurzeloberfläche bzw. der Implantatoberfläche, wodurch eine maximale Effizienz dieser Behandlungsmaßnahme erreicht wird. Fig. 3 zeigt die verschiedenen Ausströmöffnungen im Bereich des Instrumentenansatzes, die horizontal bzw. schräg nach oben verlaufen.

In einer weiteren Ausführungsform umfasst der erfindungsgemäße Instrumentenansatz 1 noch ein Adaptionsmittel 30.

Damit kann der Instrumentenansatz 1 an das Instrumentenhandstück 50 des jeweiligen Herstellers adaptiert werden. Das Adaptionsmittel 30 ist dabei so angeordnet, dass ein Fluid von einem Instrumentenhandstück 50 durch das Adaptionsmittel 30 in den Instrumentenansatz 1 fließen kann. Weiterhin stellt das Adaptionsmittel 30 eine fluiddichte Verbindung vom Instrumentenansatz 1 mit dem Instrumentenhandstück 50 da.

Das Adaptionsmittel 30 ist bevorzugt einstückig mit der Hohlröhre 5 verbunden und ringförmig ausgebildet. Damit können Adaptionsmittel 30 und Hohlröhre 5 in einem gemeinsamen Arbeitsschritt hergestellt werden. Ein mehrstückiger Aufbau und eine Verbindung beispielsweise mittels Kleben, Presssitz, Schweißen oder Schrauben ist jedoch auch möglich.

Die Gesamtlänge der Hohlröhre 5 beträgt bevorzugt nicht mehr als 18 mm. Diese Länge entspricht der maximalen Wurzellänge eines Zahnes bzw. eines Implantates. Kürzere Ausführungen sind möglich z. B. 15 mm, 12 mm oder 8 mm geben.

Der Gesamtdurchmesser des Instrumentenansatzes 1 beträgt vorzugsweise 1,5 mm oder weniger, da sonst die Einführbarkeit in die Zahnfleischtasche bzw. den peri-implantären Defekt nicht mehr gewährleistet ist.

Die verschiedenen Ausführungsformen des erfindungsgemäßen Instrumentensatzes können einzeln oder in Kombination verwendet werden. Eine Verwendung ist sowohl für die Human- wie auch für die Veterinärmedizin möglich.

### Abbildungslegenden und Bezugszeichenliste

Fig. 1 Darstellung des erfindungsgemäßen Instrumentenansatzes mit einer Ausströmöffnung 20. Die strichlinierte Linie zeigt dabei die Längsachse z.

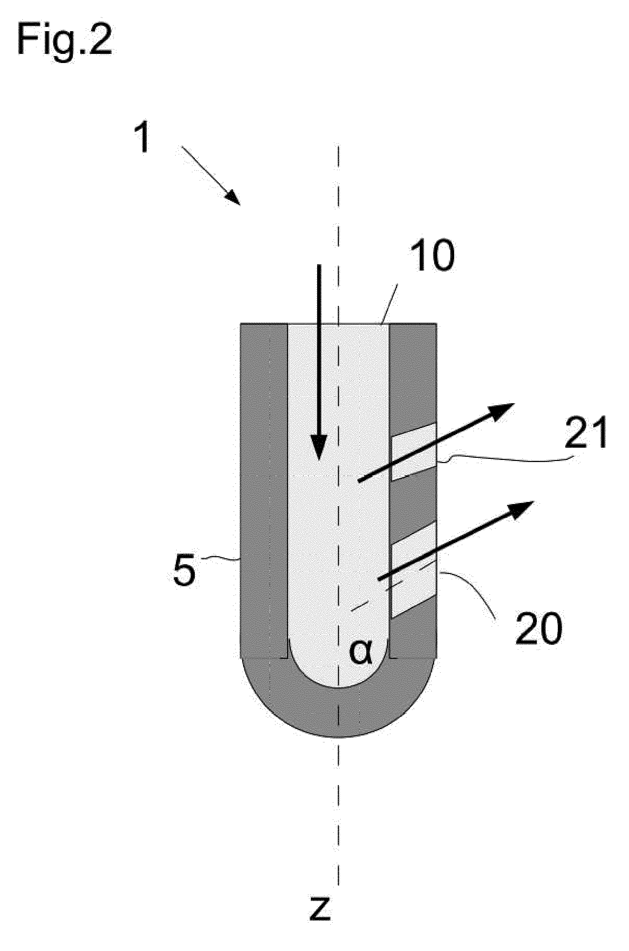

Fig. 2 Darstellung des erfindungsgemäßen Instrumentenansatzes mit mehreren Ausströmöffnungen 20 verschiedener Größe
Fig. 3 Darstellung des erfindungsgemäßen Instrumentenansatzes mit zusätzlichen horizontalen Ausströmöffnungen

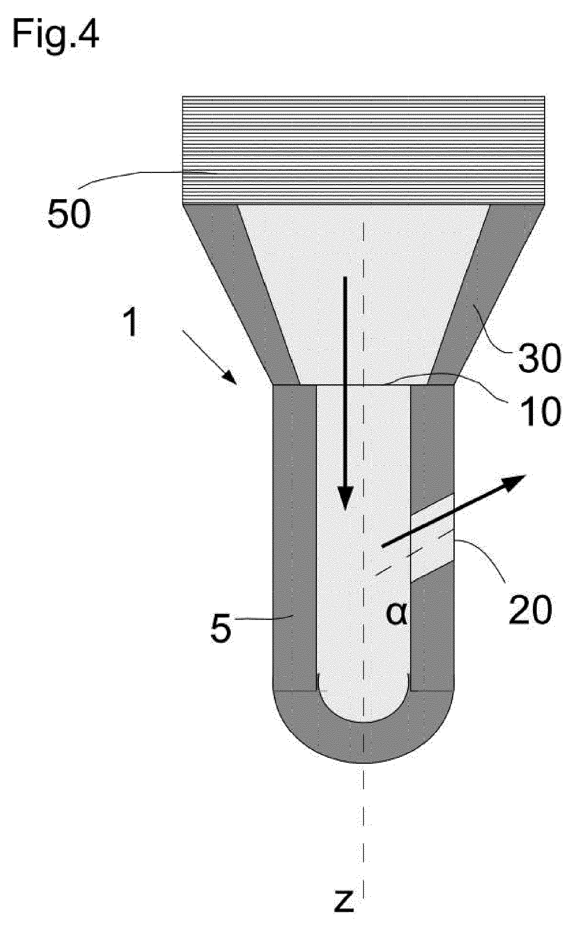

Fig. 4 Darstellung des erfindungsgemäßen Instrumentenansatzes mit einem Adaptionsmittel für die Adaption an ein Instrumentenhandstück

Die eingezeichneten Pfeile zeigen dabei die Bewegungsrichtung des Fluidstrahls.

### Bezugszeichen

- 1: Instrumentenansatz
- 5: Hohlröhre
- 10: Einströmöffnung
- 20, 21: Ausströmöffnung
- 30: Adaptionsmittel
- 50: Instrumentenhandstück
- z: Längsachse
- α: Winkel zwischen Längsachse und Ausströmöffnung

## Patentansprüche

1. Instrumentenansatz (1) zur Reinigung von Implantatoberflächen, umfassend eine Hohlröhre (5) mit einer Einströmöffnung (10), durch die ein Fluidstrahl eingeleitet werden kann und wenigstens einer Ausströmöffnung (20), wobei der Instrumentenansatz an dem der Einlassöffnung gegenüberliegenden Ende verschlossen ist, **dadurch gekennzeichnet, dass** wenigstens eine Ausströmöffnung (20) einen Winkel α von mehr als 90° bezogen auf die Längsachse z des Instrumentenansatzes aufweist, so dass eine Umlenkung des Fluidstrahles in Richtung Einströmöffnung (10) bewirkt wird.

2. Instrumentenansatz (1) gemäß Anspruch 1, **dadurch gekennzeichnet dass** das der Einströmöffnung (10) abgewandte Ende des Instrumentenansatzes (1) abgerundet ausgebildet ist.

3. Instrumentenansatz (1) gemäß Anspruch 1 oder 2, **dadurch gekennzeichnet dass** der Instrumentenansatz (1) eine weitere Ausströmöffnung (21) mit einem abweichenden Abstand von der Einströmöffnung (10) aufweist, wobei die Ausströmöffnung mit dem kleineren Abstand von der Einströmöffnung (10) kleiner ausgebildet ist.

4. Instrumentenansatz (1) gemäß einen der vorigen Ansprüche, **dadurch gekennzeichnet, dass** der Instrumentenansatz (1) noch zusätzlich wenigstens eine horizontal verlaufende Ausströmöffnung (20) aufweist.

5. Instrumentenansatz (1) gemäß einen der vorigen Ansprüche, **dadurch gekennzeichnet, dass** der Instrumentenansatz (1) ein Adaptionsmittel (30) für die Adaption an ein Instrumentenhandstück (50) umfasst, wobei das Adaptionsmittel (30) so angeordnet ist, dass ein Fluid von einem Instrumentenhandstück (50) durch das Adaptionsmittel (30) über die Einströmöffnung (10) in den Instrumentenansatz (1) fließen kann.
